# EUROPÄISCHE PATENTSCHRIFT

(11) **EP 3 334 697 B1**
(45) Veröffentlichungstag und Bekanntmachung des Hinweises auf die Patenterteilung: **22.09.2021**
(21) Anmeldenummer: 16750819.1
(22) Anmeldetag: 10.08.2016
(51) Int. Cl.: C03B 33/02, B23K 26/00, C03B 33/09, B23K 26/53, B23K 103/00

(54) **VERFAHREN ZUM SCHNEIDEN EINER DÜNNEN GLASSSCHICHT**
METHOD FOR CUTTING A THIN GLASS LAYER
PROCEDE DE DECOUPE D'UNE COUCHE DE VERRE MINCE

(30) Priorität: 10.08.2015 EP 15180376
(43) Veröffentlichungstag der Anmeldung: 20.06.2018
(73) Patentinhaber: SAINT-GOBAIN GLASS FRANCE, 92400 Courbevoie (FR)
(72) Erfinder: BÖKER, Jürgen, 50937 Köln (DE); YEH, Li-Ya, 52511 Geilenkirchen (DE)
(74) Vertreter: Feist, Florian Arno
(86) Internationale Anmeldenummer: PCT/EP2016/069008
(87) Internationale Veröffentlichungsnummer: WO 2017/025550

(56) Entgegenhaltungen:
- WO-A1-2007/119740
- WO-A1-2015/010706
- WO-A1-2015/095088
- US-A1- 2013 221 053
- US-A1- 2015 165 548
- US-A1- 2015 165 560

## Beschreibung

Die Erfindung betrifft ein Verfahren zum Schneiden einer dünnen Glasschicht und die Verwendung einer mit dem Verfahren geschnittenen Glasschicht.

Unter dünnen Glasschichten werden typischerweise Glasschichten mit einer Dicke bis zu etwa 1,5 mm verstanden, unter ultradünnen Glasschichten solche mit einer Dicke bis zu etwa 0,3 mm. Ultradünne Glasschichten können aber auch Dicken unter 0.1 mm aufweisen. Ultradünne Glasschichten werden insbesondere in elektronischen Gerätschaften verwenden, beispielsweise als Abdeckung von Displays. Sie zeichnen sich neben einem geringen Gewicht insbesondere durch ihre hohe, folienartige Flexibilität aus. Ultradünne Glasschichten werden folglich insbesondere in flexiblen Bauteilen eingesetzt, beispielsweise in flexiblen Dünnschichtsolarzellen, OLED-Elementen oder für folienartige aktive Verglasungselemente mit elektrisch schaltbaren Eigenschaften. Weitere Anwendungsfälle sind beispielsweise medizinische Gerätschaften und Sensoren.

Dünne und ultradünne Glasschichten können jedoch auch im Bereich der Fensterverglasungen eingesetzt werden, insbesondere als Bestandteile von Verbundscheiben. Werden solche Verbundscheiben in Fahrzeugbereich verwendet, so kann das Fahrzeuggewicht reduziert werden, was beispielsweise zu einer Einsparung von Treibstoff oder Batteriekapazität führen kann.

Es besteht Bedarf an Bearbeitungsmethoden für dünne und ultradünne Glasschichten, die sich in ihren bearbeitungstechnischen Eigenschaften von dickeren Glasscheiben unterscheiden, so dass klassische mechanische Glasschneidemethoden oft nicht geeignet sind. Dies gilt in besonderem Maße für ultradünne Glasschichten, bei denen das Zuschneiden zu einer rauhen Schnittkante mit Mikrorissen und anderen Beschädigungen führen kann und eine nachträgliche Kantenbearbeitung, wie bei dickeren Glasscheiben üblich, aufgrund der geringen Dicke nicht möglich ist. Laserschnittverfahren führen zu einem besseren Ergebnis und sie sind auf dünne und ultradünne Glasschichten angewendet worden, wie beispielsweise in WO 2012/067042 A1 und WO 2013/050166 A1.

Die US 2013/0126573 A1 offenbart ein Verfahren zum Schneiden von Glasschichten. Durch Bestrahlung einer Glasschicht mit einem auf das Innere der Glasschicht fokussierten, gepulsten Laser mit einer Pulsdauer kleiner 100 ps wird eine Sollbruchstelle in Form der gewünschten Schnittlinie erzeugt. Die Laserstrahlung führt zu internen Modifikationen der Mikrostruktur der Glasschicht (sogenannte Filamente), die entlang der Schnittlinie angeordnet sind und die Struktur schwächen, wodurch die Sollbruchstelle ausgebildet wird. Das eigentliche Brechen der Glasschicht erfolgt anschließend durch mechanischen Druck.

Das Brechen von Glas durch mechanischen Druck ist nur schwer in einen industriellen Massenfertigungsprozess zu integrieren, weil es in der Regel manuell erfolgen muss. Zudem sind der maximalen Krümmung der Schnittlinie Grenzen gesetzt, weil die zum Ausüben des Drucks verwendeten Werkzeuge nicht beliebig filigran gestaltet werden können. Sollen aus einer großen Scheibe verschiedene kleinere Scheiben ausgeschnitten werden, so sind aber zur Vermeidung von allzu viel Materialverschnitt kleine Krümmungsradien und geringe Abstände zwischen Schnittlinien benachbarter Schnittmuster nötig. Bei ultradünnen Gläsern treten diese Schwierigkeiten in besonderem Maße auf aufgrund der mit der geringen Glasdicke einhergehenden Fragilität. Wünscheswert ist also ein Glastrennprozess, der ohne direkten mechanischen Kontakt zum Glas auskommt.

Die WO 2014/075995 A2 offenbart ein weiteres Verfahren zum Schneiden von Glasschichten, wobei die Sollbruchstelle in Form sogenannter Filamente erzeugt wird. Um mit der Filamentierung einhergehende unerwünschte Schädigungen der Glasschicht zu vermeiden, wird vorgeschlagen, das Verfahren in einer OH-ionenarmen Schutzgasatmosphäre durchzuführen.

Die US 2015/0034613 A1 offenbart ein weiteres Verfahren zum Schneiden von Glasschichten. Die Sollbruchstelle wird auch hier durch Filamentierung hergestellt durch einen außerhalb der Glasschicht fokussierten Laser. Das eigentliche Brechen der Glasschicht kann durch Bestrahlung mit einem weiteren Laser erfolgen. Dieses Verfahren ist aber insbesondere auf ultradünnes Glas nicht anwendbar, weil die starke Erwärmung mit dem zweiten Laser zu Verbiegungen an der ultradünnen Glasschicht führt.

WO 2015/010706 A1 beschreibt ein Verfahren zur Materialtrennung von Werkstücken mittels Laserverfahren, wobei unter Verwendung eines ersten gepulsten Lasers lokale Materialmodifikationen erzeugt werden, entlang derer bei Erwärmung mittels eines zweiten kontinuierlichen Lasers und anschließender Kühlung ein Bruch im Material entsteht.

Die Aufgabe der vorliegenden Erfindung ist es, ein verbessertes Verfahren zum Schneiden einer ultradünnen Glasschicht bereitzustellen. Das Verfahren soll zu möglichst glatten Schnittkanten führen, ein geringes Risiko der Glasschädigung aufweisen und Schnittlinien mit starker Krümmung ermöglichen.

Die Aufgabe der vorliegenden Erfindung wird erfindungsgemäß durch ein Verfahren zum Schneiden einer Glasschicht gemäß dem unabhängigen Anspruch 1 gelöst. Bevorzugte Ausführungen gehen aus den Unteransprüchen hervor.

Die Glasschicht weist eine erste Oberfläche und eine zweite Oberfläche sowie eine umlaufende Seitenkante auf. Das erfindungsgemäße Verfahren zum Schneiden der Glasschicht mit einer Dicke von kleiner oder gleich 0,3 mm umfasst mindestens die folgenden Verfahrensschritte:
a) Bewegen eines ersten Laserstrahls, der von einem gepulsten Laser erzeugt wird, entlang einer Schnittlinie, wobei Materialmodifikationen im Inneren der Glasschicht zwischen der ersten Oberfläche und der zweiten Oberfläche erzeugt werden;
b) Bewegen eines zweiten Laserstrahls entlang der Schnittlinie, wobei die Glasschicht durch die Laserstrahlung erwärmt wird; und
c) Kühlen der Glasschicht entlang der Schnittlinie, wobei die Glasschicht entlang der Schnittlinie bricht,
wobei der erste Laserstrahl von einem gepulsten Laser mit einer Pulslänge von kleiner 1 ps und einer Wiederholrate von 20 kHz bis 500 kHz erzeugt wird, eine Wellenlänge von 300 nm bis 500 nm und eine Leistung von 20 W bis 100 W aufweist und wobei die durch den ersten Laserstrahl erzeugten Materialmodifikationen lokale Bereiche erhöhter Dichte umfassen, die durch Selbstfokussierung der Laserstrahlung entstehen und der Fokus des ersten Laserstrahls zwischen der ersten Oberfläche und der zweiten Oberfläche positioniert wird.

Der Vorteil des erfindungsgemäßen Verfahrens besteht darin, dass das Schneiden ohne mechanische Bearbeitungsschritte (wie Brechen durch mechanischen Druck) durchgeführt wird. Dadurch wird die Glasschicht auf schonende Weise zerschnitten, so dass sich glatte Schnittkanten ohne störende Beschädigungen ausbilden. Das Verfahren ist auch für eine automatisierte Bearbeitung gut geeignet. Das Kühlen der Glasschicht erzeugt ausreichende Spannungen im Glas und verhindert gleichzeitig ein zu starkes Erhitzen durch den zweiten Laserstrahl, so dass auch bei ultradünnen Glasschichten unerwünschte Glasverformungen wirksam verhindert werden können. Da zum Brechen des Glases kein mechanischer Druck mit geeigneten Werkzeugen ausgeübt werden muss, können sehr kleine Krümmungsradien der geschnittenen Glasschichten realisiert werden. Es hat sich gezeigt, dass Krümmungsradien von unter 2 mm problemlos hergestellt werden können, was bei einem mechanischen Bruch nicht zuverlässig möglich ist. Auch können Schnittlinien mit nur geringem gegenseitigen Abstand realisiert werden. Sollen aus einer großflächigen Glasschicht Teilbereiche herausgeschnitten werden, so ist dies mit nur geringem Materialverlust (Verschnitt) möglich.

Die erfindungsgemäß geschnittene Glaskante hat eine Kantenfestigkeit im Bereich von etwa 100 MPa bis 200 MPa, beispielsweise etwa 120MPa (nach dem dem Fachmann bekannten, standardisierten Vier-Punkt-Biegetest) und ist damit in ihrer Stabilität vergleichbar mit einer herkömmlich mechanisch geschliffenen Kante, wie bei dickeren Glasscheiben üblich. Nachbearbeitungsschritte, wie Schleifen der Kante, sind daher nicht notwendig, wodurch die Prozesskosten und das Glasbruchrisiko erniedrigt wird.

In einer vorteilhaften Ausführungsform weist der Kontur der geschnittenen Glasschicht Krümmungsradien von kleiner 2 mm. In einer weiteren vorteilhaften Ausgestaltung beträgt der Abstand unterschiedlicher Schnittlinien kleiner 5 mm. Solcher Werte sind mit mechanischen Bruchmethoden nicht zu erreichen.

Erfindungsgemäß weist die Glasschicht eine Dicke von kleiner oder gleich 0,3 mm (ultradünnes Glas) auf, bevorzugt beispielsweise von 0,03 mm bis 0,3 mm, oder von 0,05 mm bis 0,15 mm, besonders bevorzugt kleiner oder gleich 0,1 mm auf. Bei solche geringen Dicken kommen die Vorteile des Verfahrens besonders zum tragen. Verfahren mit mechanischen Bearbeitungsschritten, insbesondere mechanisches Brechen des Glases, führen bei ultradünnem Glas zu unsauberen Bruchkanten, Verfahren mit Laserschnitt ohne anschließendes Kühlen führen insbesondere bei ultradünnen Glasschichten zu Verformungen.

Die Glasschicht kann thermisch oder chemisch vorgespannt, teilvorgespannt oder nicht vorgespannt sein. In einer bevorzugten Ausführung ist die Glasschicht nicht vorgespannt. Insbesondere bei solchen Glasschichten ist die Erzeugung von Spannungen durch Erwärmung und Abkühlung nötig, um zum Bruch zu führen.

Im erfindungsgemäßen Verfahren werden zunächst innere Materialmodifikationen in der Glasschicht mit einem gepulsten Laser erzeugt. Diese Materialmodifikationen sind als sogenannte Filamente bekannt. Einzelne Filamente sind entlang der Schnittlinie aufgereiht und bevorzugt gegenseitig beabstandet. Was den Mechanismus der Filamenterzeugung angeht, gehen die Erfinder davon aus, dass aufgrund des nichtlinearen Kerr-Effekts eine Selbstfokussierung des Laserstrahls auftritt, wodurch eine höhere Leistungsdichte erreicht wird. Durch diese hohe Leistungsdichte entsteht das Filament in Folge von Multiphotonlonisierung, Feldionisierung und Elektronenstoßionisation. Das so erzeugte Elektronenplasma führt wiederum zu einer Defokussierung als Gegengewicht zur Selbstfokussierung. Das Wechselspiel von Fokussierung und Defokussierung beim Durchtritt der Laserstrahlung durch die Glasschicht zur Erzeugung eines Filaments führt dazu, dass jede Filamentstruktur eine Reihe von alternierenden fokussierenden und defokussierenden Stellen aufweist, die sich entlang der Strahlrichtung des Laserstrahl, bevorzugt senkrecht zu den Oberflächen der Glasschicht, erstreckt. Für eine detailliertere Diskussion des vermuteten Mechanismus sei auf US 2013/0126573 A1, insbesondere die Absätze [0043] bis [0048] verwiesen, ferner auf W. Watanabe: "Femtosecond Filamentary Modifications in Bulk Polymer Materials" (Laser Physics, Feb 2009, Vol. 19, No. 2, S. 342-345), F. Piao, W. G. Oldham, E. E. Haller: "Ultraviolet-induced densification of fused silica" (J. of App. Phys., Vol. 87, No. 7, 2000), . F. Ahmed et al.: "Display glass cutting by femtosecond laser induced single shot periodic void array" (Applied Physics A, 2008, No. 93, S. 189-192) und S. Rezaei: "Burst-train generation for femtosecond laser lamentation-driven micromachining", Masterarbeit Universität Toronto, 2011.

Die durch den ersten Laserstrahl erzeugten Materialmodifikationen umfassen insbesondere lokale Bereiche erhöhter Dichte, die durch die beschriebene Selbstfokussierung der Laserstrahlung entstehen.

Der erste Laserstrahl wird entlang einer gewünschten Schnittlinie bewegt. Dabei erzeugt der Laser entlang der Schnittlinie eine Materialschwächung, welche eine Sollbruchstelle für die weitere Bearbeitung bildet. Bevorzugt werden dabei die erste Oberfläche und die zweite Oberfläche der Glasschicht nicht beschädigt, also nicht mit einem Kratzer, einer Kerbe oder ähnlichem versehen. Der erste Laserstrahl führt bevorzugt nicht zu einer Materialabtragung an der ersten und zweiten Oberfläche. Stattdessen erzeugt der Laserstrahl eine Aneinanderreihung von mikrostrukturellen Materialmodifikationen im Inneren der Glasschicht entlang der Schnittlinie, sogenannte "Filamente". Jedes dieser Filamente wird von einer Reihe von Laserpulsen erzeugt. Durch eine geeignete Steuerung der Laserstrahlung werden während der Bewegung des Laserstrahls entlang der Schnittlinie in geeigneten, in der Regel periodischen Abständen solche Reihen von Laserpulsen auf die Glasschicht abgegeben. Eine solche Reihe von Laserpulsen wird häufig auch als Pulszug (*pulse train*) oder *pulse burst* bezeichnet. Jeder Pulszug erzeugt ein Filament in der Glasschicht. So bildet sich eine Aneinanderreihung von Filamenten entlang der Schnittlinie aus, wobei benachbarte Filamente einen Abstand zueinander aufweisen, Methoden zur Erzeugung solcher beabstandeter Pulszüge sind dem Fachmann bekannt, beispielsweise mittels eines sogenannten *Burst Generator.* Durch Bewegen der gepulsten Laserstrahlung wird eine Spur solcher gegenseitig beabstandeter Filamente entlang der Schnittlinie erzeugt, wodurch die Sollbruchlinie entsteht. Die Glasschicht wird durch die Filamente gleichsam perforiert. Die Materialmodifikation kann als eine lokale Dichteerhöhung, welche mit einem unterschiedlichen Brechungsindex einhergeht, angesehen werden.

Erfindungsgemäß wird der Fokus des ersten Laserstrahls zwischen der ersten Oberfläche und der zweiten Oberfläche der Glasschicht positioniert, bevor er entlang der Schnittlinie bewegt wird. So können besonders gut innere Filamente erzeugt werden, ohne die Oberflächen zu beschädigen.

Erfindungsgemäß wird der erste Laserstrahl von einem gepulsten Laser mit einer Pulslänge von kleiner 1 ps erzeugt, bevorzugt von einem gepulsten Laser mit einer Pulslänge von kleiner 500 fs. Solch kurze Pulse sind besonders vorteilhaft im Hinblick auf die Selbstfokussierung der Strahlung.

Da für die Erzeugung der inneren Materialmodifikationen das Durchdringen der Glasschicht mit Laserstrahlung wesentlich ist, wird eine Wellenlänge der Laserstrahlung gewählt, bei der die Glasschicht im Wesentlichen transparent ist. Die Glasschicht weist bei der verwendeten Laserwellenlänge bevorzugt eine Transmission von mindestens 80 %, besonders bevorzugt mindestens 90% auf. Für übliche Glasschichten kann ein Laser im sichtbaren, im nahen UV-Bereich oder im IR-Bereich verwendet werden, beispielsweise im Bereich von 300 nm bis 2500 nm, bevorzugt von 300 nm bis 1100 nm, besonders bevorzugt von 300 nm bis 800 nm. Erfindungsgemäß weist der erste Laserstrahl eine Wellenlänge von 300 nm bis 500 nm auf, bevorzugt von 320 nm bis 400 nm, beispielsweise 355 nm. Das ist zum einen vorteilhaft im Hinblick auf die Transparenz üblicher Glasschichten und zum anderen auf die kommerzielle Verfügbarkeit von geeigneten und kostengünstigen Lasersystemen. Der erste Laserstrahl wird bevorzugt durch einen Festkörperlaser mit Güteschaltung (Q-Switch) erzeugt.

Die Wiederholrate (Pulsfrequenz) des ersten Laserstrahls beträgt erfindungsgemäß von 20 kHz bis 500kHz Hz, beispielsweise 25 kHz oder 100 kHz. Damit werden gute Ergebnisse erzielt. Prinzipiell können aber auch deutlich höhere Pulsfrequenzen verwendet werden, beispielswiese bis zu 100 MHz.

Die Leistung des Lasers zur Erzeugung des ersten Laserstrahls beträgt erfindungsgemäß von 20 W bis 100 W. Die Pulsenergie beträgt bevorzugt von 4 µJ bis 500 µJ.

Durch die Wahl von Pulsfrequenz und Leistung kann beeinflusst werden, bis zu welcher Materialtiefe sich die Filamente erstrecken. Bevorzugt sollten sich die Filamente über mindestens 40%, besonders bevorzugt mindestens 50%, ganz besonders bevorzugt mindestens 60 % der Dicke der Glasschicht erstrecken ausgehend von der Oberfläche der Glasschicht, über welche die Laserstrahlung in die Glasschicht eindringt. Dann ist die Sollbruchstelle vorteilhaft ausgeprägt und die anschließende Materialtrennung effizient. Bei dünnen und ultradünnen Glasschichten erstrecken sich die Filamente bevorzugt entlang der gesamten Dicke der Glasschicht.

Die bevorzugt periodisch auftretenden Reihen von Laserpulsen (Pulszüge), wobei jede Reihe ein Filament erzeugt, werden mit einer Wiederholrate von bevorzugt kleiner 1kHz, beispielsweise in einem Bereich von 200 Hz bis 800 Hz abgegeben. Jeder Pulszug besteht aus bevorzugt mindestens 5 Pulsen, beispielsweise im Bereich von 5 bis 15 Pulsen.

Die Bewegungsgeschwindigkeit des ersten Laserstrahls entlang der Schnittlinie beträgt bevorzugt von 50 mm/s bis 1000 mm/s, beispielweise von 100 mm/s bis 500 mm/s.

Der Abstand benachbarter Filamente lässt sich bestimmen durch die Wahl der Bewegungsgeschwindigkeit der Laserstrahlung und der Wiederholrate der Pulszüge. Der Abstand beträgt bevorzugt kleiner 1 mm, besonders bevorzugt kleiner 100 µm, ganz besonders bevorzugt kleiner 20 µm, beispielsweise von 1 µm bis 10 µm. Damit wird eine vorteilhafte Materialschwächung erreicht. Mit Abstand wird hier der minimale Abstand zwischen den äußeren Begrenzungen benachbarter Filamente bezeichnet. Die Ausdehnung der Filamente senkrecht zur Strahlungsrichtung beträgt beispielsweise von 1 µm bis 50 µm oder von 2 µm bis 10 µm.

Der erste Laserstrahl wird bevorzugt mittels eines optischen Elements oder Systems auf die Glasoberfläche fokussiert. Die Ausdehnung des Fokus senkrecht zur Strahlungsrichtung kann beispielsweise 10 µm oder auch weniger betragen.

Es hat sich gezeigt, dass bei nicht geeigneter Prozessführung als Nebeneffekt Bläschen im Glas entstehen können, welche die Schnittkante negativ beeinflussen. Diese Gefahr kann dadurch verringert werden, dass die Energie der Laserpulse eines Pulszugs nicht konstant gehalten, sondern während des Prozesses verringert wird. Alternativ oder zusätzlich ist es auch möglich, den zeitlichen Abstand zwischen den Pulsen nicht konstant zu halten, sondern während des Pulszugs zu verlängern. Die Pulsenergie sollte sich dabei im Bereich von 4 µJ bis 500 µJ bewegen und die zeitliche Abstand zweier aufeinanderfolgender Pulse im Bereich sollte im Bereich des 50-fachen bis 5000-fachen der Pulslänge liegen.

Nachdem die Sollbruchlinie mit dem ersten Laserstrahl erzeugt wurde, wird der eigentlich Bruch der Glasschicht mit einem zweiten Laserstrahl bewirkt. Der zweite Laserstrahl wird entlang der Schnittlinie über die erste Oberfläche bewegt, was zu einer Erwärmung der Glasschicht im Bereich der Schnittlinie führt. Die Glasschicht wird dann entlang der Schnittlinie gekühlt, wobei die Glasschicht infolge der erzeugten thermischen Spannungen entlang der Schnittlinie bricht. Die Kombination von zweitem Laserstrahl und Abkühlung erzeugt hinreichende Spannungen, um auch ultradünne Glasschichten kleiner 0,3 mm Dicke zu schneiden.

Die zeitliche Reihenfolge der Verfahrensschritte ist nicht so zu verstehen, dass die Bestrahlung mit dem ersten Laser entlang der gesamten Schnittlinie abgeschlossen sein muss, bevor die Bestrahlung mit dem zweiten Laser beginnt, oder dass die Bestrahlung mit dem zweiten Laser entlang der gesamten Schnittlinie abgeschlossen sein muss, bevor das Kühlen beginnt. Vielmehr kann, während sich der erste Laserstrahl noch über die Schnittlinie bewegt, bereits der Bestrahlung mit dem zweiten Laserstrahl der bereits vom ersten Laserstrahl überstrichenen Bereiche der Schnittlinie begonnen werden. Es kann auch während sich der zweite Laserstrahl noch über die Schnittlinie bewegt, bereits mit dem Kühlen der bereits vom zweiten Laserstrahl überstrichenen Bereiche der Schnittlinie begonnen werden. Insbesondere diese letztgenannte Variante ist vorteilhaft, weil zwischen Erwärmung durch den zweiten Laserstrahl und der schnellen Abkühlung nicht zuviel Zeit vergehen darf, um die nötigen thermischen Spannungen zu erzeugen. Bevorzugt wird ein Mittel (Vorrichtung) zum Kühlen in Bewegungsrichtung hinter dem zweiten Laserstrahl angeordnet und der zweite Laserstrahl und das Mittel zum Kühlen mit der gleichen Geschwindigkeit entlang der Schnittlinie bewegt.

Durch die Laserstrahlung wird die Glasschicht entlang der Schnittlinie erwärmt. Es eignet sich daher besonders Laserstrahlung mit einer Wellenlänge, für die die Glasschicht einen hohen Absorptionskoeffizienten aufweist. Besonders geeignet ist aus diesem Grund Laserstrahlung im mittleren Infrarotbereich. Die Laserstrahlung weist beispielsweise eine Wellenlänge von 800 nm bis 20 µm auf, bevorzugt von 1 µm bis 20 µm auf, besonders bevorzugt von 5 µm bis 15 µm. Besonders geeignet ist ein CO₂-Laser, typischerweise mit einer Wellenlänge von 9,4 µm oder 10,6 µm. Gute Ergebnisse werden beispielsweise auch mit einem Nd:YAG-Laser erreicht. Es kann aber auch beispielsweise ein Diodenlaser oder Festkörperlaser verwendet werden.

Der Laser zur Erzeugung des zweiten Laserstrahls wird bevorzugt im Dauerstrichbetrieb (CW, *continuous wave*) betrieben. Es hat sich gezeigt, dass damit eine gute Erwärmung der Glasschicht erreicht wird. Zudem ist ein Dauerstrichbetrieb technisch einfacher zu bewerkstelligen als ein gepulster Betrieb.

In einer bevorzugten Ausführung wird der zweite Laserstrahl auf eine der Oberflächen der Glasschicht fokussiert. Das Fokussieren erleichtert die Durchführung des Verfahrens. Eine besonders starke oder genaue Fokussierung ist aber nicht erforderlich, um die nötige Erwärmung zu erreichen.

Der zweite Laserstrahl wird bevorzugt mittels eines optischen Elements oder Systems auf die Glasoberfläche fokussiert, wobei bevorzugt ein elongiertes, etwa ovales Strahlprofil erzeugt wird, beispielsweise mit einer Zylinderlinse. Die längere Achse des elongierten Strahlprofils ist dabei bevorzugt in Richtung der Schnittlinie ausgerichtet. Die Länge des Strahlprofils auf der Glasoberfläche beträgt bevorzugt von 1 mm bis 50 mm, die Breite beträgt bevorzugt von 100 µm bis 1 mm. Damit werden besonders gute Ergebnisse erzielt, insbesondere im Hinblick auf eine saubere Schnittkante. Die Brennweite des optischen Elements beträgt beispielsweise von 100 mm bis 250 mm. Damit werden gute Ergebnisse erzielt. Das elongierte Strahlprofil kann auch durch Laserscannen erzeugt werden. Auch andere Strahlprofile, beispielsweise runde, können verwendet werden.

Der zweite Laserstrahl wird bevorzugt mit einer Geschwindigkeit von 1 m/min bis 30 m/min, besonders bevorzugt von 5 m/min bis 20 m/min über Glasoberfläche bewegt, ganz besonders bevorzugt von 10 m/min bis 15 m/min. Damit werden besonders gute Ergebnisse erzielt.

Die Leistung des zweiten Laserstrahls (Ausgangsleistung) beträgt bevorzugt von 30 W bis 1 kW, beispielsweise von 50 W bis 100 W. Mit solchen Leistungen kann eine ausreichende Erwärmung der Glasschicht erreicht werden. Es können aber auch deutlich höhere Leistungen verwendet werden.

Die Bewegung des ersten und zweiten Laserstrahls und des Kühlmittels entlang der Schnittlinie kann prinzipiell durch Bewegung der Glasschicht und/oder durch Bewegung der Laserstrahlung und des Kühlmittels erfolgen. Zur Bewegung der Laserstrahlen über eine (insbesondere ortsfeste) Glasschicht eignen sich an sich bekannte Laser-Scan-Vorrichtungen, im einfachsten Fall ein oder mehrere kippbare Spiegel. Die Laserstrahlung kann auch beispielweise durch Bewegung eines Lichtwellenleiters, beispielsweise einer Glasfaser über die Glasoberfläche bewegt werden. Es kann allerdings einfacher und daher bevorzugt sein, den ersten und zweiten Laserstrahl sowie das Kühlmittel ortsfest zu lassen und lediglich die Glasscheibe zu bewegen.

Die Glasoberfläche wird nach dem Erwärmen abgekühlt. Durch die aufeinanderfolgende Erwärmung und Abkühlung werden entlang der Schnittlinie thermische Spannungen erzeugt, die bei der dünnen oder ultradünnen Glasschicht selbstständig zum erwünschten Bruch führen. Außerdem verhindert das Kühlen Verformungen des erhitzten Glases, insbesondere bei ultradünnen Glasschichten. Das Kühlen erfolgt bevorzugt durch Beaufschlagen der Glasoberfläche mit einem gasförmigen und/oder flüssigen Kühlmittel entlang der Schnittlinie. Die Erfindung ist nicht auf bestimmte Kühlmittel beschränkt. Bevorzugte Kühlmittel sind gekühltes Gas und/oder Wasser, weil eine solche Kühlung einfach zu realisieren und kostengünstig ist. Geeignete Gase sind beispielsweise Kohlendioxid oder Stickstoff

Das Kühlmittel wird bevorzugt mittels einer Düse entlang der Schnittlinie auf die Glasoberfläche gebracht. Die Düse wird bevorzugt mit der gleichen Geschwindigkeit hinter dem zweiten Laserstrahl über die Glasoberfläche bewegt. Der Zeitunterschied zwischen dem Erwärmen der Glasschicht mittels Laserstrahlung und dem Abkühlen ("Abschrecken") der Glasschicht beträgt bevorzugt von 10 ms bis 500 ms, besonders bevorzugt von 50 ms bis 100 ms. Damit werden besonders geeignete thermische Spannungen erzeugt, die zu einem effektiven Bruch mit sauberen Bruchkanten führen.

Ein Vorteil des erfindungsgemäßen Verfahrens ist, dass es einfach in eine industrielle Massenfertigung integriert werden kann, bei der ultradünne Glasschichten typischerweise im Ausgangszustand auf eine Rolle aufgerollt sind. Daher wird in einer vorteilhaften Ausführung die ultradünne Glasschicht unmittelbar vor dem Schneiden von einer Rolle abgerollt.

Die Glasschicht ist nicht auf eine bestimmte Glassorte beschränkt. Vielmehr ist das erfindungsgemäße Verfahren grundsätzlich auf Glasschichten beliebiger Zusammensetzung anwendbar. Die Glasschicht enthalten beispielsweise Kalk-Natron-Glas oder Borosilikatglas.

Eine Vorrichtung zum Schneiden einer Glasschicht mit einer ersten Oberfläche und einer zweiten Oberfläche, umfasst mindestens:
- einen gepulsten Laser zur Erzeugung eines ersten Laserstrahls, der geeignet und dafür vorgesehen ist, entlang einer Schnittlinie bewegt zu werden, um Materialmodifikationen im Inneren der Glasschicht zwischen der ersten Oberfläche und der zweiten Oberfläche zu erzeugen,
- einen Laser zur Erzeugung eins zweiten Laserstrahls, der geeignet und dafür vorgesehen ist, entlang der Schnittlinie bewegt zu werden, um die Glasschicht zu erwärmen, und
- ein Mittel zum Kühlen der Glasschicht entlang der Schnittlinie.

Die vorstehend im Zusammenhang mit dem erfindungsgemäßen Verfahren ausgeführten vorteilhaften Ausgestaltungen gelten in gleicher Weise für die nicht erfindungsgemäße Vorrichtung.

Die Vorrichtung umfasst Mittel, um die Glasschicht einerseits und die Laserstrahlen sowie das Kühlmittel andererseits relativ zueinander zu bewegen. Dies kann über die Bewegung der Glasschicht oder die Bewegung der Laserstrahlen sowie des Kühlmittels erfolgen.

Die Vorrichtung umfasst in einer vorteilhaften Ausgestaltung weiter eine Rollenhalterung, in welche eine mit einer ultradünnen Glasschicht versehene Rolle eingesetzt werden kann. Die Rollenhalterung ist dabei so angeordnet, dass das von der Rolle abgerollte Glas mit dem ersten Laserstrahl, dem zweiten Laserstrahl und dem Mittel zum Kühlen bearbeitet werden kann.

Die Erfindung umfasst weiter die Verwendung einer erfindungsgemäß geschnittenen Glasschicht in einer Dünnschichtsolarzelle oder aktiven Verglasung mit schaltbaren, insbesondere elektrisch schaltbaren Eigenschaften, bevorzugt einem elektrochromen Element, PDLC-Element (Polymer dispersed liquid crystal), elektrolumineszenten Element, einer organischen Leuchtdiode (OLEDs) oder SPD-Element (suspended particle device). Die Glasschicht kann auch als Bestandteil einer Fahrzeugverglasung verwendet werden, beispielsweise eines Personenkraftwaren, Lastkraftwagen oder eines Schienenfahrzeugs wie eines Zugs oder einer Straßenbahn. Die Glasschicht kann beispielsweise als Bestandteil einer laminierten Seitenscheibe verwendet werden, insbesondere als innere Scheibe des Laminats.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine perspektivische Ansicht einer Glasschicht während des erfindungsgemäßen Verfahrens,
- Fig. 2: einen Querschnitt durch die Glasschicht entlang der Schnittlinie L,
- Fig. 3: ein Ausführungsbeispiel des erfindungsgemäßen Verfahrens anhand eines Flussdiagramms.

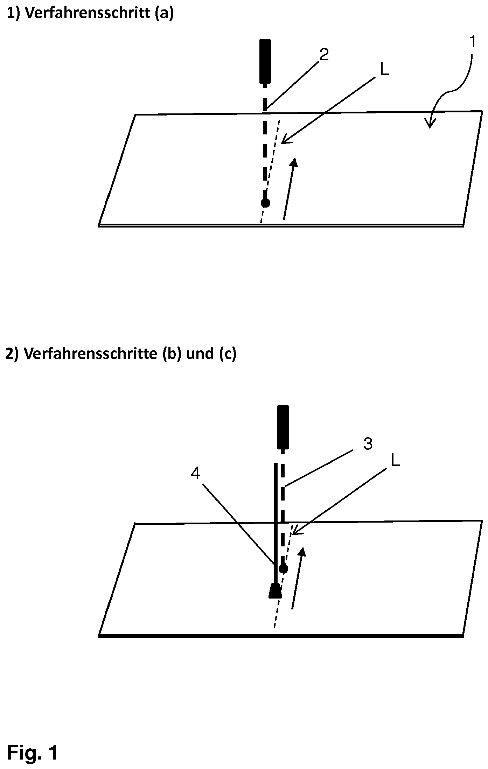

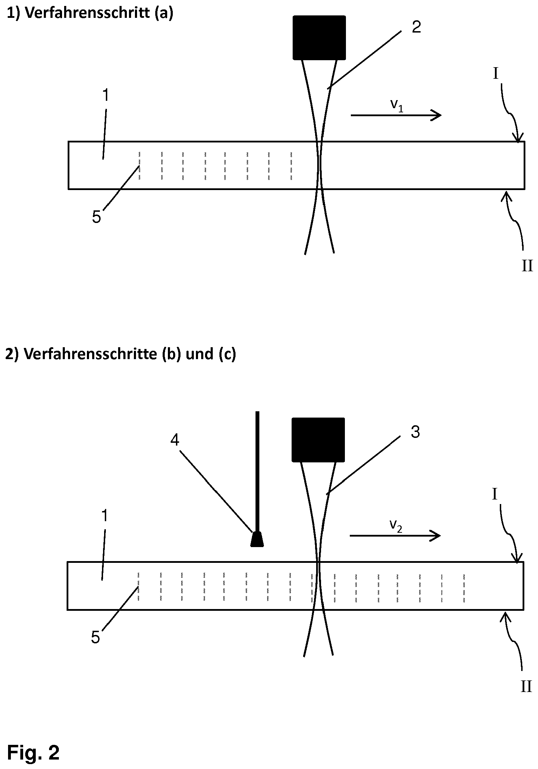

Fig. 1 und Fig. 2 zeigen je ein Detail einer schematischen Darstellung des erfindungsgemäßen Verfahrens zum Schneiden einer Glasschicht 1, beispielsweise einer ultradünnen Glasschicht mit einer Dicke von 80 µm.

Zunächst wird ein erster Laserstrahl 2, welcher auf das Innere der Glasschicht 1 zwischen den beiden Glasoberflächen I, II fokussiert ist, entlang einer gewünschten Schnittlinie L bewegt. Der erste Laserstrahl 2 wird durch einen gepulsten Laser erzeugt mit einer Pulslänge von beispielsweise 500 fs, einer Pulsfolgefrequenz von beispielsweise 25 kHz, einer Leistung von beispielsweise 50 W und einer Wellenlänge von beispielsweise 355 nm. Ein geeigneter Laser ist beispielsweise ein gütegeschalteter Festkörperlaser, insbesondere diodengepumpter Festkörperlaser. Die Glasschicht 1 ist bei der Wellenlänge des ersten Laserstrahls weitestgehend transparent. Die hochkonzentrierte Laserstrahlung führt aber zu inneren Modifikationen des Glasmaterials, sogenannten "Filamenten" 5. Diese Modifikationen 5 sind auf das Glasinnere beschränkt, die Glasoberflächen I, II werden nicht verändert oder beschädigt. Die Materialmodifikationen 5 sind entlang der Schnittlinie L aufgereiht. Die mit den Materialmodifikationen 5 einhergehende lokale Schwächung der Glasschicht definiert die Schnittlinie L als Sollbruchstelle. Jedes Filament wird durch einen Pulszug des ersten Lasterstrahl 2 erzeugt. Die voneinander getrennten Pulszüge beinhalten jeweils beispielsweise 5 Pulse und werden mit einem sogenannte *Burst Generator* erzeugt.

Anschließend wird ein zweiter Laserstrahl 3 entlang der Schnittlinie L bewegt. Der zweite Laserstrahl 3 ist beispielsweise der Strahl eines CO₂-Lasers im Dauerstrichbetrieb mit einer Wellenlänge von 10,6 µm und einer Leistung von 50 W. Der zweite Laserstrahl 3 ist mittels einer nicht dargestellten Zylinderoptik mit elongiertem Strahlprofil auf die Glasoberfläche fokussiert. Auf der Glasoberfläche weist das Profil beispielsweise eine Länge von 30 mm und eine Breite von 500 µm auf. Das Strahlprofil ist entlang der Schnittlinie L ausgerichtet, die lange Achse des Strahlprofils liegt also auf der Schnittlinie L. Der zweite Laserstrahl 3 wird effektiv durch die Glasschicht 1 absorbiert, wodurch die Glasschicht entlang der Schnittlinie L erwärmt wird.

Hinter dem zweiten Laserstrahl 3 wird eine Düse 4 entlang der Schnittlinie L bewegt. Laserstrahl 3 und Düse 4 bewegen sich dabei mit der gleichen Geschwindigkeit. Die Glasschicht wird mittels der Düse 4 mit einem Kühlmittel beaufschlagt, beispielsweise gekühlten CO₂. Das schnelle Abkühlen der erwärmten Glasschicht führt zu thermischen Spannungen, welche zum Bruch der Glasschicht 1 entlang der Schnittlinie L führen.

Die in der Figur dargestellten Pfeile deuten die Bewegungsrichtung an. Die Geschwindigkeit v₁ zur Bewegung des ersten Laserstrahls 2 beträgt beispielsweise 125 mm/s. Der zweite Laserstrahl 3 und die Düse 4 werden mit der Geschwindigkeit v₂ von beispielsweise 250 mm/s direkt hintereinander bewegt

Die Schnittlinie L ist schematisch als gerade Linie dargestellt. In der Realität können aber sehr komplexe Formen realisiert werden. Beispielsweise kann aus einer großflächigen Glasschicht kleinere Scheiben mit nahezu beliebiger Form ausgeschnitten werden. Wie sich gezeigt hat, erfolgt der Bruch der Glasschicht selbstständig aufgrund der thermischen Spannungen. Auf ein aktives Brechen durch Ausüben von Druck kann daher verzichtet werden. Dadurch können kleine Krümmungsradien realisiert werden und der Materialverschnitt reduziert werden. Zudem führt das Verfahren zu glatten Schnittkanten ohne störende Beschädigungen wie Mikrorisse. Das sind große Vorteile der vorliegenden Erfindung.

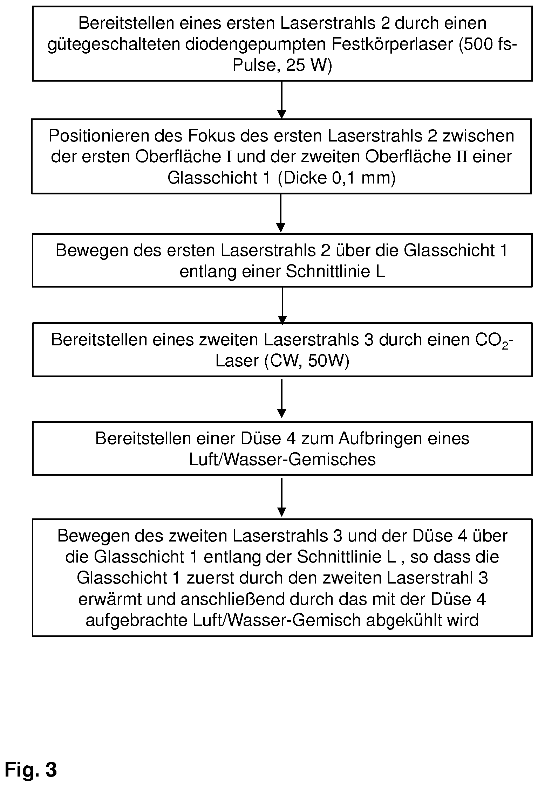

Fig. 3 zeigt ein Ausführungsbeispiel des erfindungsgemäßen Verfahrens zum Schneiden von Glasschichten.

### Beispiel 1

50 µm dicke Glasschichten wurden verschiedenen Schneideverfahren unterzogen und die Trennungswirkung verglichen. Die Verfahrensbedingungen und die Beobachtungen in der Mehrzahl der Fälle sind in Tabelle 1 zusammengefasst.

**Tabelle 1**

| | Erzeugen der Sollbruchlinie | Trennen der Glasschicht | Beobachtung |
|---|---|---|---|
| **A** | Filamente durch gütegeschalteten diodengepumpten Festkörperlaser (355 nm, 500 fs, 25kHz, 25W) | Erwärmen durch CO₂-Laser (CW, 50W, 10,6 um) | Verformung des Glases |
| **B** | Filamente durch gütegeschalteten diodengepumpten Festkörperlaser(355 nm, 500 fs, 25kHz, 25W) | Erwärmen durch CO₂-Laser (CW, 50W, 10,6 um) + Abkühlen mit CO₂ | Saubere Trennung des Glases |

Nur das erfindungsgemäße Verfahren B führt zur verlässlichen Trennung der Glasschicht. Ohne das Abkühlen (Verfahren A) ist die thermische Belastung der ultradünnen Glasschicht offenbar so hoch, dass es zu Verformungen kommt.

### Beispiel 2

Aus 50 µm dicken Glasschichten wurde mittels verschiedener Schneideverfahren Formen herausgeschnitten, welche Krümmungsradien von 1,5 mm aufwiesen. Die Verfahrensbedingungen und die Beobachtungen in der Mehrzahl der Fälle sind in Tabelle 2 zusammengefasst.

**Tabelle 2**

| | Erzeugen der Sollbruchlinie | Trennen der Glasschicht | Beobachtung |
|---|---|---|---|
| **A** | Filamente durch gütegeschalteten diodengepumpten Festkörperlaser (355 nm, 500 fs, 25kHz, 25W) | mechanischer Druck | Beschädigung der herauszuschneidenden Glasschicht |
| **B** | Filamente durch gütegeschalteten diodengepumpten Festkörperlaser (355 nm, 500 fs, 25kHz, 25W) | Erwärmen durch CO₂-Laser (CW, 50W, 10,6 um) + Abkühlen mit CO₂ | Saubere Trennung der herauszuschneidenden Glasschicht |

Durch das erfindungsgemäße Verfahren B konnten die komplexen Formen problemlos herausgeschnitten werden. Beim Vergleichsverfahren A mit mechanischem Druck wurden die komplexen Formen beim Heraustrennen beschädigt.

### Bezugszeichenliste:

- (1): Glasschicht
- (2): erster Laserstrahl (zum Erzeugen der Sollbruchlinie entlang L)
- (3): zweiter Laserstrahl (zum Zertrennen der Glasschicht 1)
- (4): Düse zum Kühlen der Glasschicht 1
- (5): Filament / lokale, interne Materialmodifikation

- v₁: Bewegungsgeschwindigkeit des ersten Laserstrahls 2
- v₂: Bewegungsgeschwindigkeit des zweiten Laserstrahls 3

- L: Schnittlinie

- I: erste Oberfläche der Glasschicht 1
- II: zweite Oberfläche der Glasschicht 1

## Patentansprüche

1. Verfahren zum Schneiden einer Glasschicht (1) mit einer Dicke von kleiner oder gleich 0,3 mm und mit einer ersten Oberfläche (I) und einer zweiten Oberfläche (II), mindestens umfassend:
a) Bewegen eines ersten Laserstrahls (2), der von einem gepulsten Laser erzeugt wird, entlang einer Schnittlinie (L), wobei Materialmodifikationen (5) im Inneren der Glasschicht (1) zwischen der ersten Oberfläche (I) und der zweiten Oberfläche (II) erzeugt werden;
b) Bewegen eines zweiten Laserstrahls (3) entlang der Schnittlinie (L), wobei die Glasschicht (1) durch die Laserstrahlung erwärmt wird;
c) Kühlen der Glasschicht (1) entlang der Schnittlinie (L), wobei die Glasschicht (1) entlang der Schnittlinie (L) bricht,
wobei der erste Laserstrahl (2) von einem gepulsten Laser mit einer Pulslänge von kleiner 1 ps und einer Wiederholrate von 20 kHz bis 500 kHz erzeugt wird, eine Wellenlänge von 300 nm bis 500 nm und eine Leistung von 20 W bis 100 W aufweist und wobei
die durch den ersten Laserstrahl (2) erzeugten Materialmodifikationen (5) lokale Bereiche erhöhter Dichte umfassen, die durch Selbstfokussierung der Laserstrahlung entstehen und der Fokus des ersten Laserstrahls (2) zwischen der ersten Oberfläche (I) und der zweiten Oberfläche (II) positioniert wird.

2. Verfahren nach Anspruch 1, wobei die Glasschicht (1) eine Dicke von kleiner oder gleich 0,1 mm aufweist.

3. Verfahren nach Anspruch 1 oder 2, wobei der erste Laserstrahl (2) von einem gepulsten Laser mit einer Pulslänge von kleiner 500 fs erzeugt wird.

4. Verfahren nach einem der Ansprüche 1 bis 3, wobei der erste Laserstrahl (2) eine Wellenlänge von 320 nm bis 400 nm aufweist.

5. Verfahren nach einem der Ansprüche 1 bis 4, wobei entlang der Schnittlinie (L) benachbarte Materialmodifikationen (5) einen Abstand von kleiner 100 µm, bevorzugt kleiner 20 µm aufweisen.

6. Verfahren nach einem der Ansprüche 1 bis 5, wobei jede Materialmodifikation (5) von einem Pulszug erzeugt wird, bei dem die Pulsenergie aufeinanderfolgender Pulse abnimmt und wobei die Pulsenergie bevorzugt von 4 µJ bis 500 µJ beträgt.

7. Verfahren nach einem der Ansprüche 1 bis 6, wobei jede Materialmodifikation (5) von einem Pulszug erzeugt wird, bei dem der zeitliche Abstand aufeinanderfolgender Pulse größer wird und bevorzugt vom 50-fachen bis zum 5000-fachen der Pulslänge beträgt.

8. Verfahren nach einem der Ansprüche 1 bis 7, wobei der zweite Laserstrahl (3) eine Wellenlänge von 1µm bis 20 µm aufweist, bevorzugt von 5 µm bis 15 µm.

9. Verfahren nach einem der Ansprüche 1 bis 8, wobei der zweite Laserstrahl (3) durch einen Laser im Dauerstrichbetrieb erzeugt wird.

10. Verfahren nach einem der Ansprüche 1 bis 9, wobei der zweite Laserstrahl (3) eine Leistung von 30 W bis 1 kW aufweist.

11. Verfahren nach einem der Ansprüche 1 bis 10, wobei das Kühlen der Glasschicht (1) durch Beaufschlagen mit einem gasförmigen und/oder flüssigen Kühlmittel entlang der Schnittlinie (L) erfolgt, bevorzugt mittels einer Düse (4).

12. Verwendung einer mit dem Verfahren nach einem der Ansprüche 1 bis 11 geschnittenen Glasschicht (1) in einer Dünnschichtsolarzelle oder aktiven Verglasung mit schaltbaren, insbesondere elektrisch schaltbaren Eigenschaften, bevorzugt einem elektrochromen Element, PDLC-Element (Polymer dispersed liquid crystal), elektrolumineszenten Element, einer organischen Leuchtdiode (OLEDs) oder SPD-Element (suspended particle device), oder als Bestandteil einer Fahrzeugverglasung.

## Claims

1. Method for cutting a glass layer (1) having a thickness less than or equal to 0.3 mm and having a first surface (I) and a second surface (II), at least comprising:
a) Moving a first laser beam (2), which is generated by a pulsed laser, along a cutting line (L), wherein material modifications (5) are produced in the interior of the glass layer (1) between the first surface (I) and the second surface (II);
b) Moving a second laser beam (3) along the cutting line (L), wherein the glass layer (1) is heated by the laser radiation;
c) Cooling the glass layer (1) along the cutting line (L), wherein the glass layer (1) breaks along the cutting line (L),
wherein the first laser beam (2) is generated by a pulsed laser with a pulse length of less than 1 ps and a repetition rate of 20 kHz to 500 kHz, has a wavelength of 300 nm to 500 nm and power of 20 W to 100 W,
and wherein
the material modifications generated by the first laser beam (2) comprise local regions of increased density that are created by self-focusing of the laser radiation, and the focus of the first laser beam (2) is positioned between the first surface (I) and the second surface (II).

2. Method according to claim 1, wherein the glass layer (1) has a thickness less than or equal to 0.1 mm.

3. Method according to claim 1 or 2, wherein the first laser beam (2) is generated by a pulsed laser with a pulse length less than 500 fs.

4. Method according to one of claims 1 through 3, wherein the first laser beam (2) has a wavelength of 320 nm to 400 nm.

5. Method according to one of claims 1 through 4, wherein along the cutting line (L), the distance between adjacent material modifications (5) is less than 100 µm, preferably less than 20 µm.

6. Method according to one of claims 1 through 5, wherein each material modification (5) is generated by a pulse train, in which the pulse energy of consecutive pulses decreases and wherein the pulse energy is preferably from 4 µJ to 500 µJ.

7. Method according to one of claims 1 through 6, wherein each material modification (5) is generated by a pulse train, in which the time interval between consecutive pulses becomes larger and is preferably from 50 times up to 5000 times the pulse length.

8. Method according to one of claims 1 through 7, wherein the second laser beam (3) has a wavelength of 1 µm to 20 µm, preferably from 5 µm to 15 µm.

9. Method according to one of claims 1 through 8, wherein the second laser beam (3) is generated by a laser in the continuous wave mode.

10. Method according to one of claims 1 through 9, wherein the second laser beam (3) has power of 30 W to 1 kW.

11. Method according to one of claims 1 through 10, wherein the cooling of the glass layer (1) is done by impacting with a gaseous and/or liquid coolant along the cutting line (L), preferably by means of a nozzle (4).

12. Use of a glass layer (1) cut with the method according to one of claims 1 through 11 in a thin-film solar cell or active glazing with switchable, in particular electrically switchable properties, preferably an electrochromic element, a PDLC element (polymer dispersed liquid crystal), an electroluminescent element, an organic light-emitting diode (OLED), or an SPD element (suspended particle device), or as a component of a vehicle glazing.

## Revendications

1. Procédé pour la découpe d'une couche de verre (1) ayant une épaisseur inférieure ou égale à 0,3 mm et ayant une première surface (I) et une seconde surface (II), comportant au moins :
a) le déplacement d'un premier faisceau laser (2), qui est produit par un laser pulsé, le long d'une ligne de découpe (L), des modifications de matériau (5) étant produites dans l'intérieur de la couche de verre (1) entre la première surface (I) et la seconde surface (II) ;
b) le déplacement d'un second faisceau laser (3) le long de la ligne de découpe (L), la couche de verre étant chauffée par le faisceau laser ;
c) le refroidissement de la couche de verre (1) le long de la ligne de découpe (L), la couche de verre (1) se cassant le long de la ligne de découpe (L),
le premier faisceau laser (2) étant produit par un laser pulsé ayant une longueur d'impulsion inférieure à 1 ps et une fréquence de répétition de 20 kHz à 500 kHz, présentant une longueur d'onde de 300 nm à 500 nm et une puissance de 20 W à 100 W, et
les modifications de matériau (5) produites par le premier faisceau laser (2) comportant des régions locales de densité augmentée qui se forment par auto-focalisation du faisceau laser et le foyer du premier faisceau laser (2) étant positionné entre la première surface (I) et la seconde surface (II).

2. Procédé selon la revendication 1, dans lequel la couche de verre (1) présente une épaisseur inférieure ou égale à 0,1 mm.

3. Procédé selon l'une des revendications 1 ou 2, dans lequel le premier faisceau laser (2) est produit par un laser pulsé ayant une longueur d'impulsion inférieure à 500 fs.

4. Procédé selon l'une des revendications 1 à 3, dans lequel le faisceau laser (2) présente une longueur d'onde de 320 nm à 400 nm.

5. Procédé selon l'une des revendications 1 à 4, dans lequel, le long de la ligne de découpe (L), une distance entre des modifications de matériau (5) adjacentes est inférieure à 100 µm, de préférence inférieure à 20 µm.

6. Procédé selon l'une des revendications 1 à 5, dans lequel chaque modification de matériau (5) est produite par un train d'impulsions, dans lequel l'énergie d'impulsion d'impulsions consécutives diminue et où l'énergie d'impulsion est, de préférence, de 4 µJ à 500 µJ.

7. Procédé selon l'une des revendications 1 à 6, dans lequel chaque modification de matériau (5) est produite par un train d'impulsions, dans lequel l'intervalle de temps entre des impulsions consécutives devient plus grand et est, de préférence, de 50 fois jusqu'à 5000 fois la longueur d'impulsion.

8. Procédé selon l'une des revendications 1 à 7, dans lequel le second faisceau laser (3) présente une longueur d'onde de 1 µm à 20 µm, de préférence de 5 µm à 15 µm.

9. Procédé selon l'une des revendications 1 à 8, dans lequel le second faisceau laser (3) est produit par un laser à ondes continues.

10. Procédé selon l'une des revendications 1 à 10, dans lequel le second faisceau laser (3) présente une puissance de 30 W à 1 kW.

11. Procédé selon l'une des revendications 1 à 10, dans lequel le refroidissement de la couche de verre (1) a lieu par impact avec un réfrigérant gazeux et/ou liquide le long de la ligne de découpe (L), de préférence au moyen d'une buse (4).

12. Utilisation d'une couche de verre (1) découpée par le procédé selon l'une des revendications 1 à 11 dans une cellule solaire à couche mince ou un vitrage actif ayant des propriétés commutables, en particulier électriquement commutables, de préférence un élément électrochrome, un élément PDLC (cristal liquide dispersé dans un polymère), un élément électroluminescent, une diode électroluminescente organique (DELo) ou un élément SPD (dispositif à particules en suspension), ou en tant que composant d'un vitrage de véhicule.
